# EUROPEAN PATENT APPLICATION

(11) **EP 1 538 550 A2**
(43) Date of publication of application: **08.06.2005**
(21) Application number: 04104164.1
(22) Date of filing: 31.08.2004
(51) Int. Cl.: G06K 15/02, G06F 3/033, G06K 1/12, B41J 2/175, B41J 2/21

(54) **Location patterns and method and apparatus for generating such patterns**

(30) Priority: 10.09.2003 US 660324
(71) Applicant: Hewlett-Packard Development Company, L.P., Houston, TX 77070 (US)
(72) Inventor: Nelson, Terry, Boise, ID, 83709 (US); Gonzalez, Manuel, 08012, Barcelona (ES)
(74) Representative: Leadbetter, Benedict

(57) **Abstract**

A printer system comprising a printer and an ink supply, the printer arranged to print a location pattern comprising a plurality of dots adapted to be read by a pattern reader, the system being further arranged to modify one or more characteristics of the dots in dependence upon a variable associated with the ink supply.

## Description

### FIELD OF THE INVENTION

This invention relates to location patterns, typically printed on a document and typically used to allow the position of a device such as a pen to be determined relative to the pattern, and to methods and apparatus for generating such patterns.

### BACKGROUND TO THE INVENTION

The invention arose out of a consideration of the work of Anoto™ Group AB and others in relation to digital pattern paper and digital pens. It is convenient to discuss the invention in that contextual background, but it will be appreciated that the invention is not restricted to use with any proprietary system.

The prior art Anoto digital pen and paper system is described on their website www.anotofunctionality.com. However, since the content of websites can change with time it is to be made clear that the prior art admitted is that which was published on their website no later than the day before the priority date of this patent application. It is also appropriate to include in this application itself a brief review of the Anoto system.

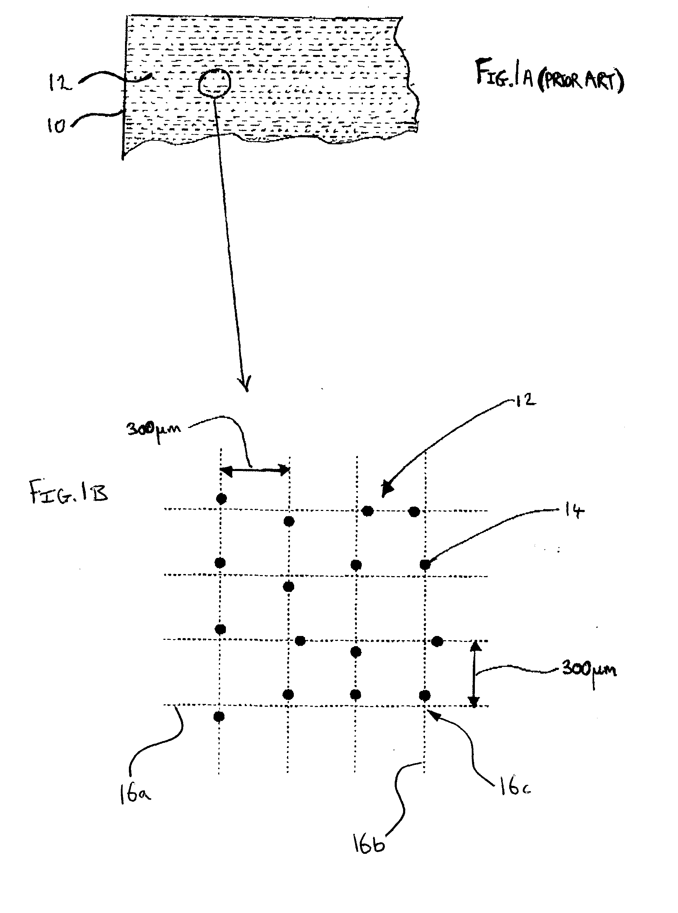

Figure 1 a shows schematically part of an A4 sheet 10 of Anoto digital paper. The sheet 10 has printed on it a part of a very large non-repeating pattern 12 of dots 14. The dots 14 of the pattern 12 are printed using infra-red absorbing black ink. The dots give the sheet 12 a pale grey appearance. An enlarged view of a small area of the pattern 12 is illustrated in Figure 1 b.

As is shown in the Figure 1b, the position identifying pattern 12 is made up of a number of dots 14 arranged on an imaginary square grid 16. The grid 16 can be considered as being made up of horizontal and vertical lines 16a, 16b defining a number of grid squares of side length 300µm, together with a number of intersections 16c where horizontal and vertical lines cross. One dot 14 is provided at each intersection 16c, but offset slightly in one of four possible directions; up, down, left or right, from the actual intersection 16c. The dot offsets are arranged to vary in a systematic way so that the pattern formed by any group of a sufficient number of dots, for example a group of 36 dots arranged in a six by six square, will be unique within a very large area of the pattern. An example of this type of pattern is described in WO 01 /26033.

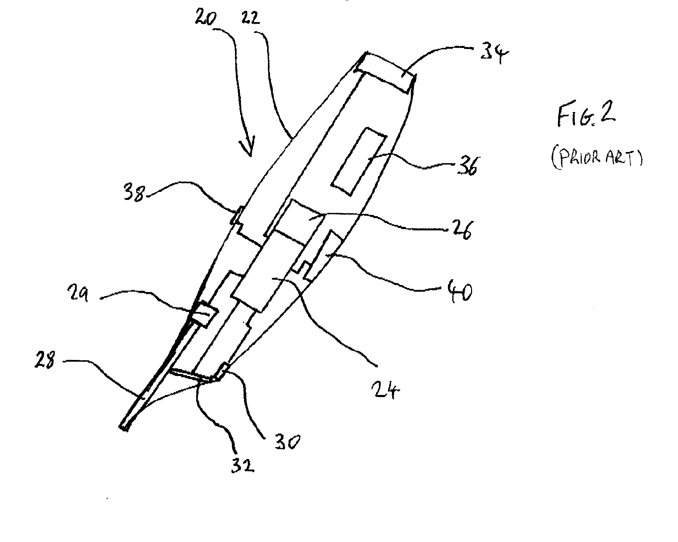

Figure 2 schematically shows a digital pen 20 adapted to write human readable ink in non-machine-readable IR transparent ink and to read a position dot pattern in infra-red. The pen 20 has a housing 22, a processor 24 with access to memory 26, a removable and replaceable ink nib and cartridge unit 28, a pressure sensor 29 adapted to be able to identify when the nib is pressed against a document, an infra-red LED emitter 30 adapted to emit infra-red light of a specified wavelength, an infra-red sensitive camera 32 (e.g. a CCD or CMOS sensor), a wireless telecommunications transceiver 34, and a removable and replaceable battery 36. Such a pen exists today and is available from Anoto as the Logitech IO™ pen.

The pen 20, when in use writing or marking the page 10, images a 6x6 array of dots 14. The pen's processor 24 establishes its position in the dot pattern 12 from that image. The processor 24 processes data acquired by the camera 32 and the transceiver 34 communicates processed information from the processor 24 to a remote complementary transceiver (e.g. to a receiver linked to a PC). Typically that information will include information related to where in the dot pattern the pen is, or has been, and its pattern of movement.

Anoto intend that their digital paper, offset-printed with dot pattern, either over the whole of its surface or over selected regions, be available from specially registered printing companies who know the technologies necessary to achieve good results. End users must buy their paper pre-printed with machine-readable position dot pattern and pre-printed with human readable content (e.g. text, or pictures, or lines, or boxes or frames etc).

This is to avoid problems. One problem avoided by such a system is that of users who design their own forms or documents, printing human-discernable or readable content over the dot pattern with the wrong ink (ink that is IR-absorbing ink), thereby masking the dot pattern from the digital pen, when the pen is used.

Another problem avoided by such a system is that of the digital pattern 12 being printed with characteristics that are different to those required for it to be read by the pen 20. In the Anoto system, as in other digital paper systems, the relative positions and sizes of the elements of the pattern are controlled to be within pre-set tolerances. In this manner, a pattern may be printed which conforms to the specifications of the system and which is suitable for use with the pen. In the case of the Anoto system, for example, examples of elements of the pattern that are controlled to be within pre-set tolerances include: the spacing between adjacent parallel lines of the grid 16; the distance by which the dots 14 are offset from their corresponding grid intersections 16c; and, the diameter of the dots 14. Many printers have technical characteristics which render them unable to reliably print the elements of such a pattern, such that the relative positions and the sizes of the pattern elements meet the pre-set tolerances. Many existing home and office printers, for example, are unable to reliably do so. For this reason, Anoto intend that the digital pattern 12 is printed using offset printers, which are able to print it with sufficient quality and with sufficient resolution in order that it may be read by the pen without error.

### SUMMARY OF THE INVENTION

According to a first aspect of the invention there is provided a printer system comprising a printer and an ink supply, the printer arranged to print a location pattern comprising a plurality of dots adapted to be read by a pattern reader, the system being further arranged to modify one or more characteristics of the dots substantially in dependence upon the quantity of ink in the ink supply.

In general, the print quality of printers varies as components of the printer age or wear. In cases such as laser printers and inkjet printers, the print quality also varies with the degree of wear or deterioration of the ink supply. In the case of an inkjet printer, the ink supply is generally an ink cartridge which includes an ink drop ejection mechanism. In the case of a laser printer, the ink supply is generally a toner cartridge which includes, amongst other components: a photoconductor; a developer roller; and, a cleaner blade. All of these components deteriorate or wear with use and/or cartridge life. In fact, the toner contained in the cartridge also degrades with time. In the case of a laser printer, the deterioration of a toner cartridge may produce any of various print defects, which may include: banding; streaking; ghosting; visual noise; image density changes; and, changes in printed image size and shape.

By modifying one or more characteristics of the dots in the location pattern in dependence upon the degree of wear or deterioration of the ink supply, the effects on printing performance of the wear or deterioration of the toner cartridge may be compensated for. In this manner, a dot pattern of a particular type may be printed in a relatively stable manner. Furthermore, this may be achieved within the specifications of the system across a greater proportion, or indeed the entire life of the ink supply. This may extend the usable life of the ink supply and reduce the operating costs for the user.

In embodiments of the invention, components of an ink supply may be monitored in order to determine the current printing performance using that ink supply. Alternatively, the output print quality may be measured using conventional tests. In either case, the characteristics of the dots of digital patterns may be modified in dependence upon the determined printing performance or print quality or using that ink supply. However, in certain embodiments of the invention, the degree of wear or deterioration is inferred from the level of toner remaining in the toner cartridge of a laser printer. It has been found that generally this gives a reasonably reliable indication of the printing performance of a toner cartridge.

In one embodiment the modification of the one or more characteristics of the dots in the location pattern is made substantially at the time of printing, although in other embodiments it may be made somewhat in advance of the time of printing.

In one embodiment, a dot characteristic that is modified in dependence upon the quantity of ink in the supply, is the dot size. In this embodiment, smaller dots are printed as the level of ink remaining in the ink supply falls.

In one embodiment, when using certain laser printers, when the ink supply is relatively full, the dots making up the digital pattern are printed such that they are relatively large. As the toner cartridge degrades with time and the level of remaining toner falls, the print quality also falls. One result of the falling print quality in this case is a change in the size of the printed dots, which tends to increase as the toner cartridge degrades. In this embodiment, the printer system is arranged to print with smaller dots (i.e. the print data sent to the printer specifies smaller dots) as the toner cartridge degrades in order to compensate for the increasing size of the printed dots.

In another embodiment, when the ink supply is relatively full the dots making up the digital pattern are printed such that they are relatively small. In certain systems, when the printer is printing normally, with a relatively full ink supply, the size of the dots may have an upper limit, above which they may not be reliably read by a pattern reader of the system. Alternatively, or additionally, it may be desirable to use a digital pattern made up of small dots in preference to one made up of large dots, since small dots may interfere less than large dots with any human discernable content printed on the same sheet or carrier.

When the ink supply becomes relatively depleted, the printed output of the printer may change relative to that produced when the ink supply is not depleted. For example the printed output may become faint, resulting in patters made up of small dots printed when the ink supply is relatively depleted to be unreliably read by a pattern reader. In this embodiment it has been found that the use of larger dots when printing with a relatively depleted ink supply results in printed patterns which may be reliably read by the pattern reader.

In other embodiments, the size of the printed dots is changed more than once during the life of the ink supply. In some of these embodiments, each change may adjust the dot size in the same direction; for example, to be made smaller at each occasion, or larger at each occasion. In other embodiments, the change may be in a different direction to the subsequent change. It has been found that some laser printers with use tend to print dots which initially increase in size with cartridge life and then subsequently decrease in size with cartridge life. Such an embodiment may be used with benefit in such situations.

In other embodiments, the effect of varying print quality caused by other factors is compensated for.

The present invention also extends to: software or a printer driver for generating such a location pattern; and, corresponding methods for generating or printing such location patterns; as defined in the appended claims.

### BRIEF DESCRIPTION OF THE DRAWINGS

For a better understanding of the invention and to show how the same may be carried into effect, there will now be described by way of example only, specific embodiments, methods and processes according to the present invention with reference to the accompanying drawings in which:
Figure 1 a shows schematically a sheet of Anoto digital paper;
Figure 1b shows schematically an enlarged portion of the sheet illustrated in Figure 1a;
Figure 2 shows schematically a known digital pen;
Figure 3 shows schematically a system for creating and printing digitals document according to one embodiment of the invention;
Figure 4a is a flow diagram showing a method of designing an electronic document according to an embodiment of the present invention;
Figure 4b is a flow diagram showing a method of generating a digital pattern and digital document according to an embodiment of the present invention;
Figures 5a and 5b schematically illustrate exemplary digital documents printed according to embodiments of the present invention; and,
Figures 6a and 6b are schematic illustrations of dots forming exemplary portions of digital patterns printed using methods according to embodiments of the present invention.

### DETAILED DESCRIPTION OF THE INVENTION

There will now be described, by way of example only, the best mode contemplated by the inventors for carrying out embodiments of the invention.

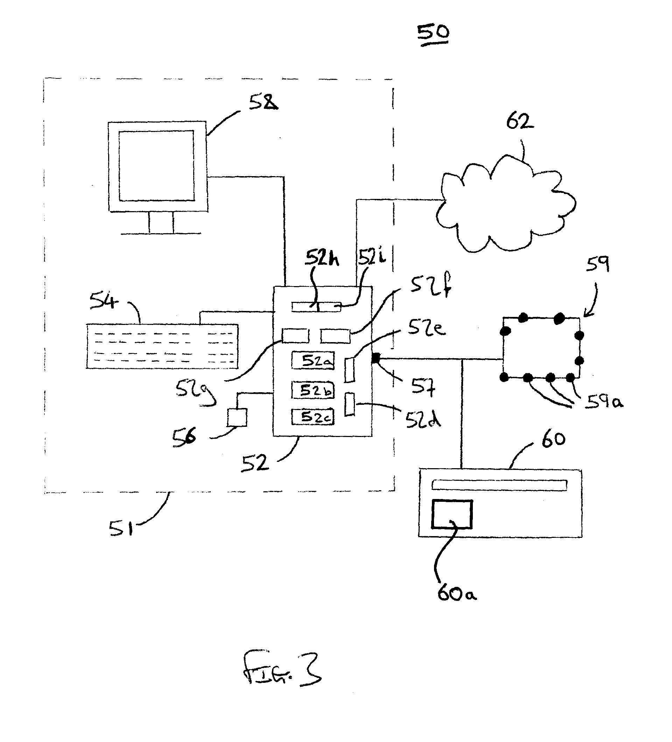

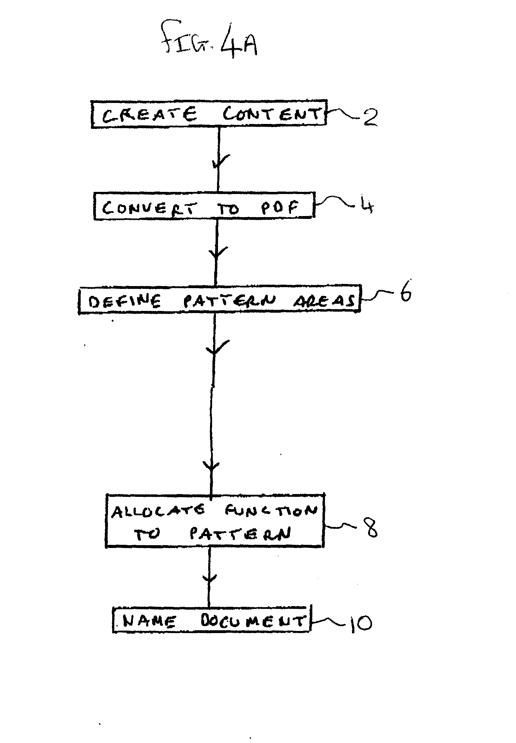

Figure 3 is a schematic illustration of a system 50 for printing a document having a pattern, according to an embodiment of the invention.

The system 50 comprises a workstation 51 including a personal computer (PC) 52 which is connected to a local printer 60. In practice, the printer may instead be connected to the PC 52 via a network. The PC 52 may also be connected to the Internet 62. The PC 52 includes a user interface including a screen 58, a keyboard 54 and a mouse 56. The PC 52 has as a processor 52a, a memory 52b, and I/O software devices 52c by means of which the processor communicates with the screen 58, the keyboard 54 and the mouse 56 and a communications port 57 by means of which it communicates with the Internet 62 or a local network such as a LAN 59 having peripheral devices and/or other computers (e.g. PCs) 59a.

The workstation 51 has access to a database 52d of pattern data for use with Anoto-type digital documents. The database 52d may also have user names and identification numbers, which are in use associated with each particular document at the time of printing of the document and which may be printed out with the document. This database 52d may be on the PC or elsewhere on a network, for example on a local file server or on the Internet. This may take the form of a digital pattern space allocation server as is used in the Anoto system. The PC 52 also includes a software tool, known as a Print-on-Demand (PoD) tool, referenced 52e the figure. The PoD tool 52e has access to the database 52d of pattern data, as is described in more detail below.

The PC 52 is arranged to generate electronic digital documents that comprise a pattern 12 of dots 14. The digital documents may be "Anoto-type" digital documents. However, it will be appreciated that the invention is not restricted to use with any proprietary system.

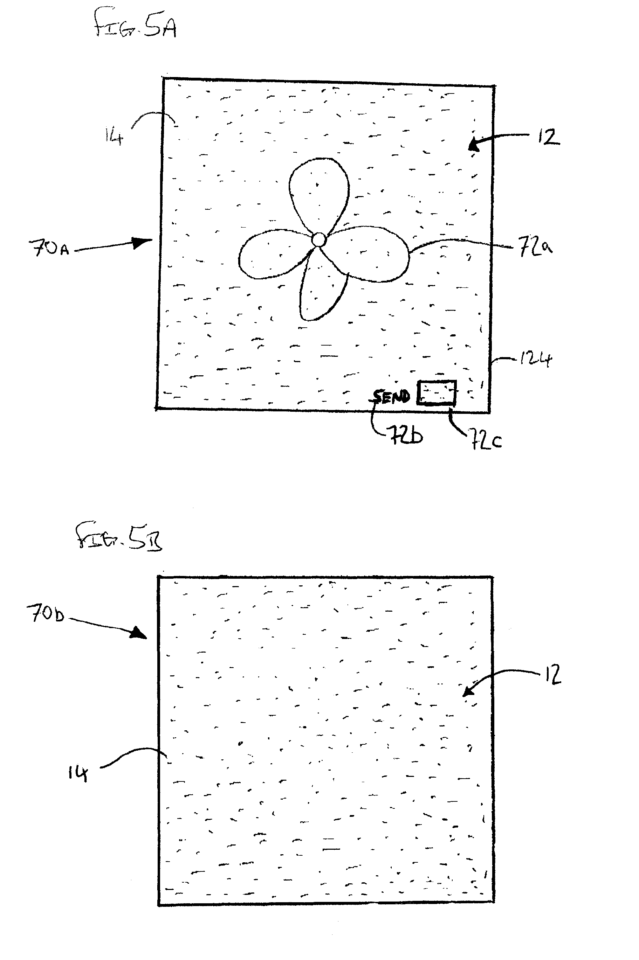

In certain embodiments of the invention, the digital documents may be printed such that they have both a pattern 12 of dots 14 and human-discernable content. The human-discernable content may include amongst other things include text, graphics and check boxes, for example. Figure 5a illustrates schematically a hard (paper) copy of such a digital document. The hard copy comprises a carrier 70a in the form of a single sheet of A4 paper, with the machine-readable pattern 12 of dots 14 printed on it. In this example, the user has defined the pattern area to cover the entire area of the carrier 70a, as can be seen from the figure. Also printed on the paper 70a are further markings 72a-c, which are clearly visible to a human user of the form, and which make up the human-discernable content of the document. In the example illustrated the content is made up of a schematic image of a flower 72a, the word "SEND" 72b and a check box 72c. The nature and amount of the content will depend entirely on the intended use of the document.

Such digital documents may be used for specific functions, such as questionnaires or forms, for example. Suitable techniques for simultaneously printing a digital pattern and human-discernable content on printers, such as inkjet and laser printers, are more fully described in co-pending British patent application No. 0321164.6, incorporated by referenced herein, entitled "Methods, apparatus and software for printing location pattern", (Hewlett-Packard reference 200300566-1; Attorney docket JL3824).

In certain methods of the invention, the digital documents are printed with no, or substantially no human-discernable content. Thus, the resultant printed digital documents in such methods are suitable for a wide variety of uses by a user; i.e. they may be used as the digital equivalent of blank notepaper. Figure 5b illustrates schematically a hard (paper) copy of such a digital document. The hard copy again comprises a carrier 70b in the form of a single sheet of A4 paper, with the machine-readable pattern 12 of dots 14 printed on it. In this example, the user has defined the pattern area to cover the entire area of the carrier 70b, as can be seen from the figure. As can be seen from the figure, there are no markings printed on the paper 70b, for human use.

The user interface of the PC 52 allows a user to the view electronic versions of digital documents to be printed, using a conventional software viewer application, referenced 52f in Figure 3, on the screen 58. An already existing, previously designed document may be accessed from a database of such documents for printing. Alternatively, a new document may be designed by the user. The user may make modifications to the digital documents prior to printing them should this be required. Such changes may include modifying any human-discernable content that may be present in the document or modifying the area or areas, in terms of size or shape for example, on the digital document that are to have digital pattern applied to them. This may be achieved through the user interface, which includes the keyboard 54 and mouse 56 and software (not shown) for processing inputs from them, as well as the screen 58 and software 52g for producing the content, e.g. images and/or text, on the screen.

Techniques for allowing a user to modify and print, on demand, documents which have position identifying pattern on them for use with a digital pen and paper system are more fully described co-pending British patent application No. 0321168.7, incorporated by referenced herein, entitled "Printing of documents with position identification pattern", (Hewlett-Packard reference 200310132-1; Attorney docket ASW1329).

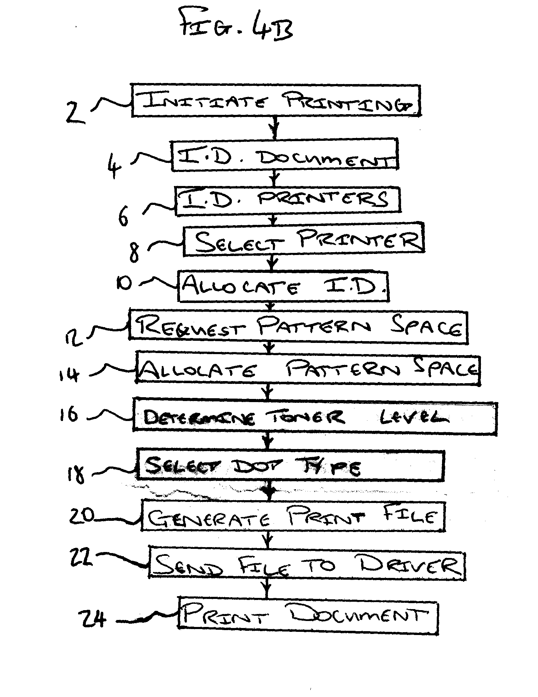

Figure 4a is a flow diagram showing an exemplary method of designing a generic electronic digital document suitable for use with embodiments of the present invention. The method starts at step 2 with the design of the human-discernable content of the document. The design work is carried out on the PC using a software application. The application may, for example, be Acrobat Reader or a word processing package such as 'Word', a database package such as 'Access', or a spreadsheet package such as 'Excel'. Each of these applications may be used to design the content of the document. The content is converted to PDF format at step 4. It will be understood that in the event that no human-discernable content is incorporated into the documents, the steps 2 and 4 may be omitted from the method.

The machine-readable pattern areas of the document are then defined at step 6. In this case this is carried out using a form design tool (FDT) 52h, shown in Figure 3, which in the present embodiment is in the form of an Acrobat 5.0 plug-in. In one simple case, the machine-readable pattern area of the document may be the entire page; which may be a single A4 sheet for example. This may even be set as the default setting at this step.

At step 8 the user allocates any desired computer-implemented functions to one or more areas of pattern in the document. In this manner, such a pattern area may code for instructions to perform the associated function. For example, a "send" function may be designated by a user to the pattern area associated with the box 72c of the document 70a shown in Figure 5a, for example. In this way, when the pen is used to check the box 72c, the system knows that the updating of the document 70a is complete. In one simple case, such a document need have no such computer-implemented functions.

At step 10 a name is given to the document.

Once the user is happy with the design of the digital document, it may be printed out.

The process of printing a document according to the present embodiment, will now be described with reference to the flow diagram in Figure 4b. In this example, a digital document consisting of single sheet of A4 is printed. For the purposes of clarity, this exemplary document has no human-discernable content and has a machine-readable pattern of dots printed over its entire surface, such as is illustrated in Figure 5b.

At step 2, the user initiates the printing process, by selecting a printing option on a user interface (UI) (not shown). This causes the PoD tool, referenced as 52e in Figure 3, to open a printing UI in a conventional manner. Using the printing UI the user requests the number of prints and various other printing parameters (e.g. whether the printed document is to be in colour or black and white, etc.). At step 4, the PoD tool 52e identifies from the document file name that the document is a document having a position identifying pattern on it. The PoD tool 52e then identifies those printers on the network which the user may select to print the print job, at step 6. In the present example, this includes the printer 60. The user selects the printer 60 and initiates the print operation, in a conventional manner, at step 8.

In the present embodiment, the printer 60 is a conventional laser printer with a resolution of 600dpi, such as is conventionally used in office environments. The Hewlett-Packard Laserjet 4550n and the Hewlett-Packard Laserjet 9000n are examples of such of laser printers. In the present embodiment, the printer is a monochrome printer having a single conventional black toner cartridge (not shown), printing with UV absorbing black toner. In other embodiments however, the printer 60 may be a colour printer, typically printing in black and three complementary colour inks.

The printer 60 has a conventional object database, or memory 60a, which is illustrated in Figure 3. Such memories are used to store various variables that are relevant to the operation of the printer 60. For example, the colour of the toner cartridge in the printer (or each of the cartridges if there are more than one) is stored in the memory 60a. In the present embodiment, the printer stores in the memory 60a a value corresponding to the cumulative number of pages so far printed with the current cartridge. This may be implemented in a conventional manner. Such techniques are well understood in the art and so will not be described here. From this value, it may be approximately calculated or determined, or even inferred, how much toner remains in the cartridge, as is described in more detail below.

Although, a laser printer is used in the present embodiment, in other embodiments of the invention other suitable types of printer may be used. These may include inkjet printers, LED printers, LCD printers, Liquid Electrophotographic Printers. Photocopiers can also be considered as printers. The difference between an electrostatic, toner-based photocopier, for example, and a laser printer is not significant for many aspects of the invention. Indeed, it is not uncommon for computers, e.g. PCs to be configured to print from photocopiers. It will, thus be understood that the term "ink" is meant to include liquid inks, and powder inks (e.g. toner that needs heat to fuse to a page/surface) and gels: it is not used in a sense to restrict its physical form. Furthermore, it will be understood that other suitable printers also have a memory, similar to the memory 60a, for storing information from which the quantity of ink still remaining in the cartridge or ink supply etc. employed in the printer may be at least approximately obtained.

Once the actual print is initiated, the PoD tool 52f allocates a unique instance ID to the printed document, at step 10. It then requests the required amount of pattern space from the database 52d of pattern data, at step 12, providing the document name and instance ID. In the current example, the requested pattern area is sufficient to cover substantially all of the document, in this example a sheet of A4 paper, as stated above. For other examples, only some areas of the document will need to be allocated a digital pattern.

An area of pattern is allocated at step 14 to the document from a virtual pattern space stored in the database 52d. In the present example, the PoD tool 52e receives back from the database 52d a definition of the pattern space allocated. In the present embodiment, this is in the form of a co-ordinate reference within the total pattern space. This may take the form of, for example, upper left and lower right co-ordinates of the allocated area in the pattern space. The workstation 51 is then able to re-create the dot pattern in the allocated area from that information in a conventional manner. In other embodiments, a full definition of the actual pattern to be used may be transmitted from the database 52d to the PoD tool 52e. Such a full definition may take the form of co-ordinate positions, for example, of each dot in the allocated area.

At this stage, it will be appreciated that the definition of the dot pattern contains the nominal, or ideal positions of the dots which lie in the allocated pattern space. Furthermore, the size and form of the individual dots in the allocated pattern space are defined only by the specification of the system. In the case of the Anoto system, for example, the dots are circular with a diameter of approximately 100µm.

The PoD tool 52e then obtains, at step 16, data relating to the amount of toner that is remaining in the cartridge associated with the printer 60. In order to achieve this, the memory 60a of the printer 60 is interrogated by the PoD tool 52e. The skilled reader will appreciate that this may be done either directly by the PoD tool 52e or by an interrogating entity. The interrogating entity may take the form of a software routine or program, such as an object database client. Alternatively, the interrogating entity may be implemented using hardware or firmware. Various methods of interrogating the memory 60a are known. However, in the present embodiment, the TCP/IP (Transmission Control Protocol/Internet Protocol) protocol, SNMP (Simple Network Management Protocol) is used. HP Webjet Admin, available from Hewlett-Packard, is one example of a peripheral management software tool which may be used to implement this function.

The PoD tool 52e then determines, at step 18, the characteristics of the dots which will make up the digital pattern in the digital document which is to be printed. This is carried out in dependence upon the data relating to the amount of toner that is remaining in the cartridge associated with the printer 60. In the present embodiment, when it is determined that the cumulative number of pages already printed with the current cartridge is less than a given threshold value, dots having a first set of characteristics are selected for use in the digital pattern. However, when it is determined that the cumulative number of pages already printed with the current cartridge is equal or greater than the given threshold value, dots having a second or different set of characteristics are selected for use in the digital pattern.

In this manner, the dots which make up the digital patterns printed by the system of the present embodiment may have variable or different characteristics. In the present embodiment these characteristics are controlled to vary with the remaining level of toner in the cartridge of the printer. By changing the characteristics of the dots of the digital patterns in dependence upon the current toner level of the toner cartridge, digital patter may be printed by the system of the present embodiment that may be more reliably read by the pen 20 throughout the life of the cartridge.

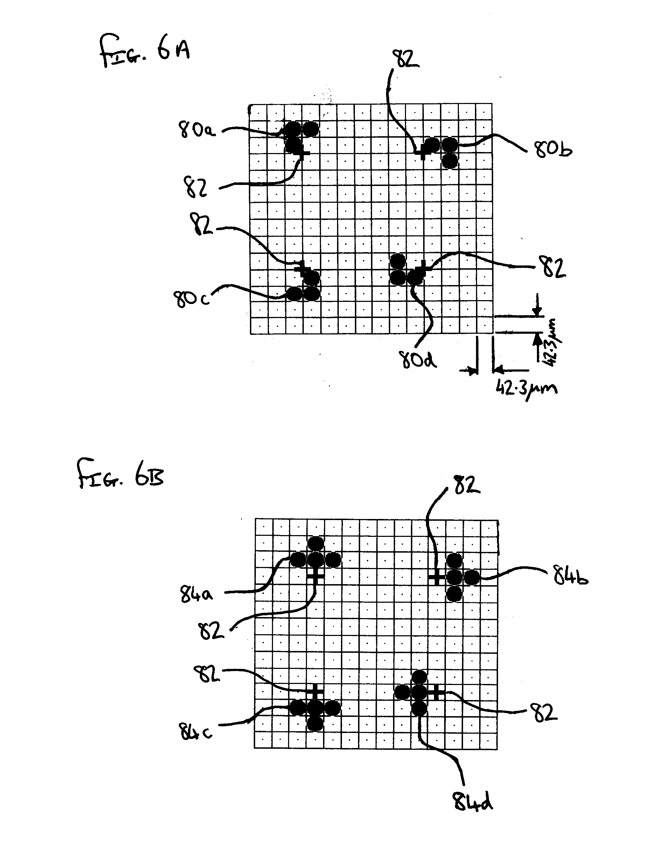

Referring now to Figures 6a and 6b, exemplary pattern areas illustrating sets of dots of differing characteristics according to the present embodiment are illustrated. In Figure 6b, dots having a first set of characteristics according to the present embodiment are illustrated. In Figure 6a, dots having a second set of characteristics according to the present embodiment are illustrated. In each case, the dots form part of an exemplary digital pattern. In the current example, the exemplary digital patterns conform to the type of digital pattern employed in the Anoto system.

It will be understood by the skilled reader that the representations of dot patterns illustrated in Figures 6a and 6b are schematic, or idealised illustrations. These schematic illustrations may most closely resemble a raster image or bit map of the dots prior to being printed. This may be as generated in application software, such as the PoD tool 52e, or as in the data processed by the printer driver 52i, prior to being sent to the printer 60. It will of course be appreciated that when the dots are in fact printed, the printed shape of a dot may vary somewhat from the schematic shapes illustrated. This may be due to several factors. One of these is due to imperfections of the print engine, which causes its printed output to be only an approximation of the pre-printed image.

For ease of explanation, each of the figures is shown against an imaginary background grid. Each of the individual squares making up the grid represent the smallest individual unit of addressable printable area; i.e. the smallest individual unit of area which may be printed by the printer 60. Thus, the grid represents the native resolution of the printer. Thus, each of the pixels which may be printed by the printer 60 substantially fills a given square. It will thus be understood that since the native resolution of the printer 60 is 600dpi, the length of each of the individual squares making up the grid is 42.3µm.

Turning now to Figure 6b, four dots 84a-d which have a first set of characteristics according to the present embodiment are illustrated. Each of the four dots 84a-d is positioned adjacent a different corresponding point of intersection between imaginary gridlines (not shown). The intersection points are indicated by crosses 82. The crosses 82 are separated from their immediate neighbours in the horizontal and vertical directions by 7 individual squares. This equates to 296.3µm, which is approximately equal to the 300µm used in the Anoto system. Each of the dots 84a-d occupies a different position (i.e. above, to the right, to the below and to the left, respectively) relative to its corresponding cross; thus illustrating the four encoding positions employed in the Anoto system.

Referring now to the individual dots 84a-d, it can be seen from the figure that each of the dots 80a-d is made up of four pixels arranged in an "T" shape. It will in fact be clear to the skilled reader that rotating dot 84c, for example, +90, 180 and +270 degrees about its adjacent cross yields the orientational and positional relationship of dots 84d, 84a and 84b, respectively, relative to their respective adjacent crosses.

It has been found that Anoto type digital patterns, made up of dots with the characteristics of dots 84a-d, printed with a range of 600dpi laser printers may generally be reliably read by the pen 20; particularly when printed during the phase of a cartridge's life when the level of toner in the printer cartridge is relatively full. It will thus be appreciated that dots of these characteristics have been found under these circumstances to satisfy the requirements of the Anoto system, discussed above. It has also been found that dots which are significantly smaller than the dots 84a-d may not be reliably read during this phase of the cartridge's life. However, in the present embodiment, as the toner cartridge degrades with time and the level of remaining toner falls, the size of the printed dots progressively increases. Thus, as the dot size increases the dots 84a-d eventually reach a size at which they are no longer reliably read by the pen 20.

Turning now to Figure 6a, four dots 80a-d are illustrated. The dots 80a-d have a second set of characteristics according to the present embodiment, as are described below. As was the case in Figure 6b, each of the four dots 80a-d is positioned adjacent a different corresponding point of intersection between imaginary gridlines (not shown). Again, the intersection points are indicated by crosses 82, which are again separated from their immediate neighbours in the horizontal and vertical directions by 296.3µm. Again, each of the dots 80a-d occupies a different position (i.e. above, to the right, to the below and to the left, respectively) relative to its corresponding cross; again, illustrating the four encoding positions employed in the Anoto system.

Referring now to the individual dots 80a-d, it can be seen from the figure that each of the dots 80a-d is made up of three pixels arranged in an "L" shape. As was the case with the dots 84a-d, rotating the dot 80c, for example, +90, 180 and +270 degrees about its adjacent cross yields the orientational and positional relationship of dots 80d, 80a and 80b, respectively, relative to their respective adjacent crosses. It will be understood that the dots 80a-d comprise one less pixel and have a different form to that of the dots 84a-d. Thus, it will be understood that the dots 80a-d, when printed, have a smaller surface area or size than do the dots 84a-d, at any given stage of the life of the toner cartridge.

It has been found that Anoto type digital patterns, made up of dots with the characteristics of dots 80a-d, printed with the same range of printers mentioned above, may be reliably read by the pen 20, when the level of toner in the printer cartridge is relatively low at the time of printing. In particular, it has been found that digital pattern printed with dots with the characteristics of dots 80a-d may be reliably read when the pattern is printed during the phase of the cartridge's life during which pattern printed with dots of the characteristics of the dots 84a-d may no longer reliably read by the pen 20. It will thus be appreciated that dots of having the characteristics of the dots 80a-d have been found under these circumstances to satisfy the requirements of the Anoto system, discussed above.

Returning now to Figure 4b, at step 18 of the method, the PoD tool 52e selects the type of dots, or the characteristics of the dots for use in printing the current digital document. Thus, at step 18, the PoD tool 52e selects the characteristics of dots 84a-d in order to generate the digital pattern if it has been determined at step 16 that the cumulative number of pages already printed with the current cartridge is less than a given threshold value. Alternatively, the PoD tool 52e selects dots of the characteristics of dots 80a-d in order to generate the digital pattern if it is determined that the cumulative number of pages already printed with the current cartridge is equal or greater than the given threshold value. Thus, a first set of dots with a given set of characteristics are used if the toner cartridge is relatively full; and, a second set of dots with a different set of characteristics are used if the toner cartridge is relatively empty.

It will of course be appreciated that for a given experimental set up, a desirable point at which to set threshold value may be determined using conventional experimentation techniques.

In certain cases, where a digital document has more than one page, the PoD tool 52e may use dots having the first set of characteristics for generating the digital pattern for one or more pages of the document and may use dots having the second set of characteristics for generating the digital pattern for a further one or more pages. This may occur, for example, in the case where it is determined by the the PoD tool 52e that the cumulative number of pages printed by the current toner cartridge of the printer 60 will be incremented past the threshold value during the printing of the current digital document.

At step 20 of Figure 4b, the PoD tool 52e in conjunction with the workstation 51 re-creates the dot pattern which is to be printed, using dots with the characteristics selected at step 18. In the present embodiment, the information defining the characteristics of the selected dot type is stored locally with respect to the workstation 51, in the memory 52b of the PC 52. However, in other embodiments, this information may be stored on a server connected to a network such as a LAN or the Internet 62, or indeed in a memory associated with the printer that is to be used, such as the memory 60a. The PoD tool 52e then converts the re-created dot pattern into a print file ready for printing in a conventional manner. In the present embodiment, the dot pattern which is to be printed is re-created as a bit map, although any other suitable format may instead be used.

At step 22, the print file is then converted into a language that can be understood by the printer driver 52i (illustrated in Figure 3) associated with the workstation 51 and is sent to the printer driver 52i. Examples of a suitable language are PCL5 or Postscript. However, other languages may instead be used.

At step 24, the print file is sent to the printer 60, where the document is printed.

As is well understood in the art, human-discernable content normally undergoes a half-toning and masking operation prior to printing in order to determine what content, if any, is printed at each pixel of the printing operation. However, it will be understood that the digital pattern may bypass a half-toning operation. In the present embodiment, the pixels of the digital pattern may either be "on" or "off", with no shades of intensity between those extremes. The digital pattern data may be sent from a colour separation stage directly to a masking stage, or even directly to the printer.

It will also be appreciated that where the digital document is to be printed on the same carrier as human-discernible content, it may be desirable to use inks with different characteristics. For example, the digital pattern may be printed using an ink that absorbs IR radiation and the human-discernable content may be printed using human readable, IR transparent ink. In this manner, the risk of the human-discernable content obscuring or masking the digital pattern may be avoided.

In one such embodiment of the invention, a four-colour laser or inkjet printer may be used. The digital patter is printed using an infra-red absorbing black ink. The human-discernable content is printed using cyan, magenta and yellow inks that are not infra-red absorbing. In this embodiment, the black ink channel is processed separately from the cyan, magenta and yellow channels. In this manner, the human-discernable content and the digital pattern may be maintained separate. This and other methods of simultaneously printing human-discernable content and the digital pattern with laser and other types of printers are more fully described co-pending British patent application No. 0321164.6, incorporated by referenced above, entitled "Methods, apparatus and software for printing location pattern", (Hewlett-Packard reference 200300566-1 ; Attorney docket JL3824).

From the above description it will be understood that the printing characteristics of printers vary between printer types and models. In the above description examples of dot characteristics have been given that have been found to work well with a range of printers. However, it will be appreciated by the skilled reader that the optimal dot characteristics will vary with the system used. The optimal dot characteristics for a given system may be determined using conventional experimental techniques. Thus, the optimal dot characteristics for a given system may vary from the examples given in various ways. These may include, but are not limited to, the use of dots having a different: number of pixels; shape; size; orientation; relative position; and colour, relative to the dots in the examples described.

### FURTHER EMBODIMENTS

In the above description numerous specific details are set forth in order to provide a thorough understanding of the present invention. It will be apparent however, to one skilled in the art, that the present invention may be practiced without limitation to these specific details. In other instances, well known methods and structures have not been described in detail so as not to unnecessarily obscure the present invention.

Although the above-description was described with reference to two types of dots, having different characteristics, which may be used with Anoto type patterns, it will be appreciated that other dots having different characteristics may also be usefully employed in conjunction with embodiment of the present invention. A more complete description of dots that may be used in printing digital patterns of the Anoto type is given in co-pending US Patent Application Serial No. 10/660,323, incorporated by referenced herein, entitled "Location Patterns And Methods And Apparatus For Generating Such Patterns" (HP reference 200310542-1; Attorney docket 621241-9).

Furthermore, although the above-description was described with reference to the printing of an Anoto type pattern, it will of course be understood that other position identifying patterns may equally be used in conjunction with embodiments of the present invention. Some examples of other suitable patterns are described in WO 00/73983 and WO 01/71643.

Furthermore, although in the above-described embodiment two sets of dots having different characteristics were employed for use in printing digital patters at different levels of toner depletion, or cartridge wear or deterioration, it will be appreciated that in other embodiments, this may be varied. For example, in one embodiment, three or more phases of the life of the cartridge may be identified. Each of these phases may have associated with it a corresponding set of dots with characteristics suitable for use during that phase. Furthermore, it will be appreciated that an appropriate number of sets of dots and phases of the life of the cartridge will depend greatly on the system used and may also be determined experimentally.

Although in the above description the dots having the first set of characteristics were of a different shape to those having the second set of characteristics, it will be appreciated that this need not be the case in other embodiments. In certain embodiments the dots having the first set of characteristics and the dots having the second set of characteristics may be of the same shape. In some such embodiments, the dots having the first set of characteristics and the dots having the second set of characteristics may be of the same shape but a different size, for example. In one example, the dots having the first set of characteristics may be made up of a three by three square array of pixels. The dots having a second set of characteristics may be made up of a two by two square array of pixels.

Such embodiments, where dots made up of a relatively high number of individual pixels are used, may be more usefully applied to operational set ups where the printer used has a comparatively high resolution; for example a 1200 dpi printers, such as the Hewlett-Packard Laserjet 5000dn laser printer. In such cases, a relatively large increase in the number of pixels used to print each dot need not necessarily result in an unacceptably big increase in the size of the printed dots. Thus, it will be appreciated that embodiments of the present invention may be used in conjunction with printers of higher or lower resolution than 600dpi described above.

Although in the above-described embodiment, characteristics of the dots making up a digital pattern are varied in dependence upon the amount of ink remaining in the ink supply, it will be appreciated that other printing related variables which affect the detectability of the dot pattern by a pattern reader, or pen 20, may also be used to vary the characteristics of the dots printed. One example includes atmospheric conditions, such as humidity and temperature.

## Claims

1. A printer system comprising a printer and an ink supply, the printer arranged to print a location pattern comprising a plurality of dots adapted to be read by a pattern reader, the system being further arranged to modify one or more characteristics of the dots substantially in dependence upon the quantity of ink in the supply.

2. A system according to claim 1, arranged to modify the size of the dots.

3. A system according to claim 1, arranged to modify the shape of the dots.

4. A system according to any one of claims 1, arranged to print dots having a first set of characteristics when the quantity of ink is determined to be above a predetermined threshold and to print dots having a second set of characteristics when the quantity of ink is determined to be below the predetermined threshold.

5. A system according to claim 4, wherein the dots printed with the second set of characteristics are larger than the dots printed with the first set of characteristics.

6. A system according to claim 5, wherein the dots printed with the first and second sets of characteristics have substantially the same shape.

7. A system according to claim 5, wherein the dots printed with the first and second sets of characteristics have different shapes.

8. A system according to claim 7, wherein the dots having the first set of characteristics are substantially "L" shaped.

9. A system according to claim 7, wherein the dots having the second set of characteristics are substantially "T" shaped.

10. A system according to claim 4 or any one of claims 5 to 9 dependent thereon, arranged to detect three or more ranges in the quantity of ink in the supply and is further arranged to print dots having a corresponding set of characteristics at each of the ranges.

11. A system according to any preceding claim, wherein each of the plurality of dots has a nominal position offset in one of a plurality of directions, such as above, below, to the left and to the right, from the intersection point of a virtual grid.

12. A system according to any preceding claim, wherein the modification of the one or more characteristics of the dots substantially does not alter the nominal position of each dot.

13. A system according to any preceding claim, wherein the printer is a digital printer.

14. A system according to claim 13, wherein the printer is an inkjet printer, a LED printer, a LCD printer, or a liquid electrophotographic printer.

15. A system according to claim 13 or claim 14, wherein the printer also functions as a photocopier.

16. A system according to any one of claims 13 to 15, wherein the printer has a resolution of approximately 600dpi.

17. A system according to any preceding claim, wherein the dots are printed in IR absorbing ink.

18. A system according to any preceding claim, adapted to print the location pattern without human-discernible content.

19. A system according to any preceding claim, adapted to print the location pattern and human-discernible content on the same carrier.

20. A method of generating a location pattern comprising a plurality of dots, comprising the steps of:
receiving data relating to the degree of deterioration or wear associated with one or more elements of an ink supply; and,
selecting characteristics of the pattern dots in dependence upon the received data.

21. A method according to claim 20, further comprising the step of requesting pattern information from a pattern database.

22. A method according to claim 20 or claim 21, further comprising the step of generating a print file comprising pattern area having dots with the selected characteristics.

23. A method according to claim 22, further comprising the step of printing the print file on a printer associated with the ink supply.

24. A method according to any one of claims 20 to 23, wherein the data corresponds to the quantity of ink in the supply.

25. A computer program or a printer driver comprising program code means for performing the method steps of any one of claims 20 to 24 when the program is run on a computer and/or other processing means associated with suitable apparatus.

26. A printer system comprising a printer and an ink supply, the printer arranged to print a location pattern comprising a plurality of dots adapted to be read by a pattern reader, the system being further arranged monitor a variable associated with the printing process and to modify the size of the dots in dependence upon the monitored variable.

27. A system according to claim 26, wherein the monitored variable is the ambient temperature or humidity.

28. A printer system comprising a printer and an ink supply, the printer arranged to print a location pattern comprising a plurality of dots adapted to be read by a pattern reader, the system being further arranged to modify one or more characteristics of the dots substantially in dependence upon a variable associated with the ink supply.

29. A system according to claim 28, wherein the variable provides an indication of the current level of deterioration of the ink supply or wear associated with one or more elements of the ink supply.

30. A system according to claim 28 or claim 29, wherein the variable provides an indication of the cumulative degree of use of the ink supply.

31. A system according to claim 28, wherein the variable is the quantity of ink in the supply.

32. A location pattern system comprising a printer adapted to print location patterns made up of a plurality of dots and a pattern reader adapted to detect the printed dots, the system being adapted to print patterns having a dot size dependent upon a variable associated with an associated ink supply at substantially the time of printing, such that the dot detection response of the pattern reader is maintained substantially constant between patterns printed when the ink supply contained substantially different levels of ink.
